# FASCICULE DE BREVET EUROPEEN

(11) **EP 2 446 155 B1**
(45) Date de publication et mention de la délivrance du brevet: **17.04.2013**
(21) Numéro de dépôt: 10730070.9
(22) Date de dépôt: 11.06.2010
(51) Int. Cl.: F16B 37/00, F16B 37/04

(54) **DISPOSITIF DE FIXATION A ECROU PLASTIQUE**
PLASTIKMUTTER-BEFESTIGUNGVORRICHTUNG
PLASTIC NUT FASTENING DEVICE

(30) Priorité: 26.06.2009 FR 0903120
(43) Date de publication de la demande: 02.05.2012
(73) Titulaire: A. Raymond et Cie, 38000 Grenoble (FR)
(72) Inventeur: ALBARAN, Jean-Francois, F-38760 Varces (FR)
(74) Mandataire: RACKETTE Partnerschaft Patentanwälte
(86) Numéro de dépôt international: PCT/EP2010/003516
(87) Numéro de publication internationale: WO 2010/149279

(56) Documents cités:
- BE-A- 702 765
- DE-C1- 4 343 243
- FR-A- 1 330 461
- FR-A- 1 486 531

## Description

### Domaine technique de l'invention

L'invention est relative à un dispositif de fixation sur un élément de support, comportant un écrou plastique percé, dans une direction axiale, d'un trou adapté à se conformer par déformation plastique au contour d'un élément fileté extérieurement, ledit écrou comprenant un corps insérable axialement dans une ouverture allongée de l'élément de support, la section transversale du corps étant complémentaire de l'ouverture et allongée dans une première direction principale de manière que l'écrou soit enfiché à travers l'ouverture puis bloqué par pivotement avec une tête d'appui aménagée à une extrémité du corps et un rétrécissement intermédiaire entre la tête d'appui et le corps, muni d'au moins une surface de butée pour limiter le pivotement de l'écrou.

### État de la technique

Un dispositif de fixation comprenant un écrou plastique coopérant avec un élément fileté extérieurement est par exemple connu du document FR1330461. L'écrou est dépourvu de tête d'appui, ce qui limite considérablement le champ d'application, en l'absence de possibilité de blocage. L'une des extrémités du corps comporte deux surfaces d'arrêt adaptées pour s'appliquer contre le pourtour de l'ouverture afin de limiter la rotation de l'écrou à 90 degrés, ce qui représente une amplitude angulaire fastidieuse en pratique.

Un autre dispositif de fixation est divulgué dans le document FR1486531, mettant en oeuvre une tête d'appui de forme circulaire venant contre l'élément de support du côté opposé au côté contre lequel vient se bloquer le corps après pivotement de l'écrou. Au moins une surface de butée est prévue dans un rétrécissement aménagé entre la tête d'appui et le corps de manière à limiter le pivotement de l'écrou à une plage de 45 degrés, ce qui reste fastidieux à mettre en oeuvre. Le diamètre de la section circulaire transversale est inférieur à la plus grande dimension de l'ouverture allongée réalisée dans l'élément de support. Il en résulte que l'ouverture n'est jamais recouverte en totalité, quel que soit l'état de l'écrou. D'autre part, la forme circulaire de la tête implique qu'il est impossible de vérifier rapidement l'état bloqué ou non de l'écrou.

### Objet de l'invention

L'objet de l'invention consiste à réaliser un dispositif de fixation répondant aux problèmes ci-dessus.

Le dispositif selon l'invention est remarquable en ce que la tête présente une forme complémentaire de l'ouverture avec une section transversale allongée dans une deuxième direction principale formant avec la première direction principale un angle de décalage compris entre 5 degrés et 25 degrés, et en ce que ladite au moins une surface de butée est configurée pour limiter le pivotement de l'écrou par rapport à l'ouverture à un angle sensiblement égal audit angle de décalage, de sorte que la tête vienne recouvrir la totalité de l'ouverture au blocage de l'écrou.

Un angle de décalage compris entre 5 degrés et 25 degrés facilite la mise en oeuvre par rapport à l'art antérieur où il était nécessaire de réaliser un pivotement de l'écrou d'au moins 45 degrés pour parvenir au blocage. De manière complémentaire, le dispositif de fixation permet d'identifier visuellement de manière directe si un écrou est à l'état bloqué ou non : la tête de l'écrou ne recouvre l'ouverture ménagée dans l'élément de support qu'à l'état bloqué, c'est-à-dire après un pivotement de l'écrou d'un angle de rotation égal à l'angle de décalage entre les directions principales de la tête et du corps, depuis la position angulaire qu'occupait au préalable l'écrou au moment de l'engagement du corps à travers l'ouverture.

Selon un mode de réalisation préférentiel, le corps comporte deux pattes de clippage pour retenir l'écrou sur l'élément de support quelle que soit la configuration de pivotement de l'écrou par rapport à l'ouverture, lesdites pattes étant opposées dans la deuxième direction principale. Il en résulte que l'écrou est verrouillé par clippage sur l'élément de support même avant le pivotement de l'écrou conduisant à l'état bloqué, c'est-à-dire dès la fin de l'engagement du corps de l'écrou dans l'ouverture. Le passage à l'état bloqué a pour effet de renforcer la retenue axiale déjà réalisée par les pattes de clippage quelle que soit la configuration de pivotement de l'écrou par rapport à l'ouverture, en mettant en appui des surfaces d'appui du corps contre l'arrière de l'élément de support, le corps n'étant alors plus en regard de l'ouverture contrairement au moment de l'engagement du corps. Une disposition opposée des pattes de clippage dans la deuxième direction principale a pour effet de renforcer la retenue axiale réalisée par les pattes de clippage à l'état bloqué par rapport à celle réalisée dans les autres configurations de pivotement.

### Description sommaire des dessins

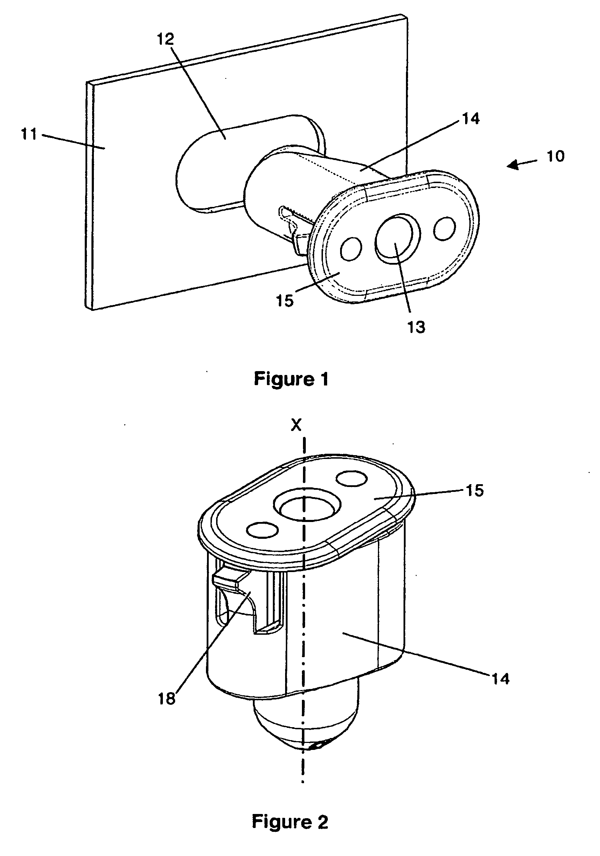

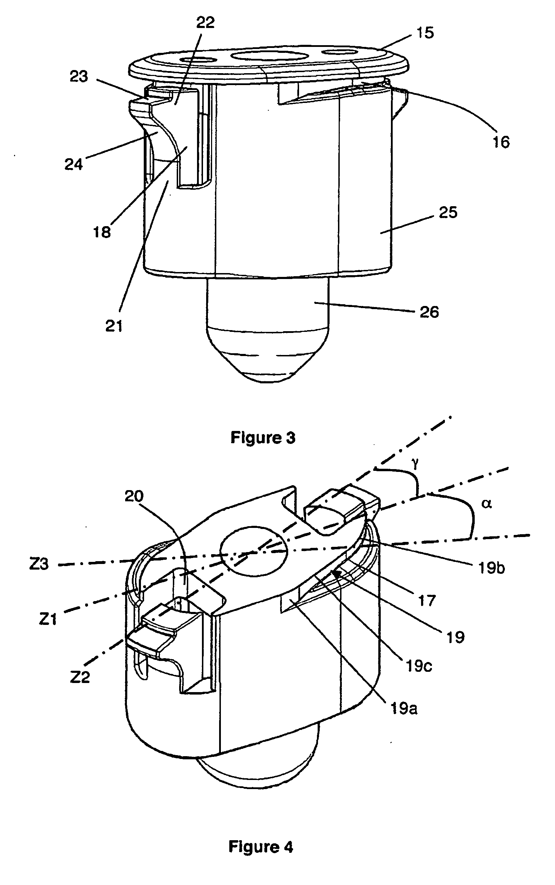

D'autres avantages et caractéristiques ressortiront plus clairement de la description qui va suivre de modes particuliers de réalisation de l'invention donnés à titre d'exemples non limitatifs et représentés aux dessins annexés, dans lesquels les figures 1 à 3 illustrent en perspective un exemple de dispositif selon l'invention, et la figure 4 est une vue du dispositif des figures 1 à 3 après une coupe réalisée sous la tête d'appui.

### Description d'un mode préférentiel de l'invention

Les figures 1 à 4 représentent un exemple de dispositif de fixation selon l'invention. De manière générale, le dispositif comporte un écrou plastique 10 et un élément fileté extérieurement (non représenté) et a pour vocation de s'utiliser pour la fixation d'un élément à fixer (non représenté) sur un élément de support 11 muni d'une ouverture allongée 12. L'écrou 10 vient se bloquer dans l'ouverture 12 de l'élément de support 11, puis l'élément fileté est vissé à force dans l'écrou 10 pour y générer un filetage par déformation plastique et réaliser le serrage de l'élément à fixer. L'élément de support 11 est par exemple un panneau ayant une faible épaisseur en comparaison de ses autres dimensions, au moins au niveau de l'ouverture 12 ménagée à travers celui-ci.

Le dispositif de fixation sur un élément de support 11 comporte un écrou plastique 10 percé, dans une direction axiale X, d'un trou 13 adapté à se conformer par déformation plastique au contour d'un élément fileté extérieurement au cours du vissage de ce dernier. Ce type d'écrou 10 est également connu sous le nom de « molaire », et l'élément fileté peut par exemple être une vis à matériaux tendres, d'un diamètre supérieur au trou 13 axial de l'écrou 10, de manière à ce que le vissage de l'élément fileté génère automatiquement un filetage correspondant dans le trou 13. L'effort réciproque dirigé axialement qui en résulte a pour effet de réaliser la fixation de l'élément à fixer par serrage.

Avant de visser l'élément fileté dans l'écrou 10, il est nécessaire de verrouiller puis bloquer l'écrou sur l'élément de support 11. À cet effet, l'écrou 10 comprend d'une part un corps 14 ayant une section transversale complémentaire mais légèrement plus petite que la forme de l'ouverture 12, d'autre part une tête d'appui 15 aménagée à une extrémité du corps 14, et enfin un rétrécissement intermédiaire entre la tête d'appui 15 et le corps 14. Le corps 14 est donc insérable axialement dans l'ouverture allongée 12 de l'élément de support 11, de manière à engager l'écrou 10 partiellement dans l'ouverture 12 jusqu'à loger l'épaisseur de l'élément de support 11 dans au moins un évidement 16 constitutif du rétrécissement, par exemple au nombre de deux. À la fin de l'engagement axial du corps 14 de l'écrou 10 au travers de l'ouverture 12, l'élément de support 11 est situé entre le corps 14 et la tête 15. Plus précisément, la tête 15 est en appui d'un côté avant de l'élément de support 11 et le corps 14 pourra venir en appui, après pivotement en vue du blocage, sur le côté arrière de l'élément de support 11. Compte tenu de la forme allongée de l'ouverture 12, la section transversale du corps 14 est allongée dans une première direction principale Z1. Le plan transversal correspond à un plan perpendiculaire à la direction axiale X de l'écrou 10. Ainsi l'écrou 10 peut être enfiché à travers l'ouverture 12 par engagement du corps 14 dans l'ouverture 12, puis bloqué par pivotement. Le trou 13 débouche du côté de la tête 15, et se prolonge à l'intérieur du corps 14.

La tête 15 présente également une forme complémentaire de l'ouverture 12 avec une section transversale allongée dans une deuxième direction Z2 principale formant avec la première direction principale Z1 un angle de décalage α compris entre 5 degrés et 25 degrés. La section transversale de la tête 15 est complémentaire mais légèrement plus grande que la forme de l'ouverture 12.

Les deux évidements 16 constitutifs du rétrécissement sont opposés dans un plan transversal selon une troisième direction Z3 formant avec la première direction principale Z1 un angle de décalage y compris entre 5 degrés et 25 degrés mais d'une valeur opposée à l'angle de décalage α entre les première et deuxième directions principales Z1 et Z2. Les deux évidements 16 ont pour premier effet de délimiter deux surfaces d'appui 17 à l'extrémité du corps 14 raccordée à la tête 15. Ces surfaces d'appui 17 ne sont pas en contact avec le côté arrière de l'élément de support 11 lorsque le corps 14 est en regard de l'ouverture 12, c'est-à-dire à la fin de l'engagement du corps 14 et avant d'avoir appliqué à l'écrou 10 un pivotement en vue de son blocage. Par contre ces surfaces d'appui 17 viennent en contact avec le côté arrière de l'élément de support 11 lorsque le corps 14 n'est plus en regard de l'ouverture 12, c'est-à-dire après avoir appliqué un pivotement à l'écrou 10 en vue du blocage. Cette mise en contact des surfaces d'appui 17 contre l'arrière de l'élément de support 11 participe au blocage de l'écrou 10, en combinaison avec l'action de retenue réalisée par des pattes de clippage 18 décrites plus loin. L'intervalle interposé entre la tête 15 et les surfaces d'appui 17 est sensiblement égal ou légèrement supérieur à l'épaisseur attendue de l'élément de support 11 en périphérie de l'ouverture 12.

Le deuxième effet des évidements 16 constitutifs du rétrécissement est de délimiter deux flancs 19 connectant chacun la tête 15 à l'une des surfaces d'appui 17. Ces flancs 19 sont en retrait par rapport au reste du corps 14. Chaque flanc 19 présente un profil particulier dans un plan transversal, de manière à chacun former une surface de butée pour limiter le pivotement de l'écrou. Le profil se compose de trois parties : deux parties d'extrémités 19a, 19b de forme courbe pour raccorder le reste du corps 14 à la partie centrale 19c qui constitue la surface de butée proprement dite. La partie centrale 19c du profil est par exemple rectiligne, de sorte que chacune des surfaces de butée est plane. Dans tous les cas, chacune des surfaces de butée est configurée pour limiter le pivotement de l'écrou 10 par rapport à l'ouverture 12 à un angle sensiblement égal à l'angle de décalage α entre les directions principales Z1 et Z2. La mise en appui des surfaces de butée contre le pourtour de l'ouverture 12 s'accompagne de la mise en appui des surfaces d'appui 17 du corps 14 contre l'arrière de l'élément de support 11, et correspond au passage de l'écrou 10 à l'état bloqué. Pour mettre en appui les surfaces de butée depuis la configuration de pivotement qu'occupe l'écrou 10 au moment de l'engagement du corps 14 dans l'ouverture 12, il est nécessaire de réaliser un pivotement de l'écrou 10 selon un angle de rotation défini par les surfaces de butée. Comme les surfaces de butée sont configurées pour limiter le pivotement de l'écrou 10 par rapport à l'ouverture 12 à un angle sensiblement égal à l'angle de décalage α entre la tête 15 et le corps 14, la tête 15 vient recouvrir la totalité de l'ouverture 12 au blocage de l'écrou 10.

Il pourrait être envisagé de ne réaliser qu'un seul évidement 16 sous la tête d'appui 15 pour constituer le rétrécissement. Dans ce cas, une seule surface d'appui 17 serait présente à l'extrémité du corps 14 raccordée à la tête 15, et un seul flanc 19 en retrait du reste du corps 14 connecterait la tête 15 à ladite unique surface d'appui 17. Cet unique flanc 19 ne formerait donc qu'une seule surface de butée.

Le corps 14 comporte par exemple deux pattes de clippage 18 pour retenir l'écrou 10 sur l'élément de support 11 après engagement quelle que soit la configuration de pivotement de l'écrou 10 par rapport à l'ouverture 12. Chaque patte 18 peut par exemple se présenter sous la forme d'une lame élastique connectée à une extrémité au corps 14 et dirigée en direction de la tête 15. Chaque patte de clippage 18 est par exemple disposée le long d'un évidement 20 aménagé extérieurement dans le corps 14. Chaque patte de clippage 18 est raccordée au reste du corps 14 exclusivement par l'une de ses extrémités au moyen d'une zone de raccordement 21. La flexion de la zone de raccordement 21 associée à une patte de clippage 18 donnée éventuellement accompagnée de la flexion intrinsèque de la patte de clippage 18 assure le débattement de la patte de clippage 18 en direction de l'évidement 20 correspondant formé dans le corps 14. La zone de raccordement 21 est aménagée en dessous de l'évidement 20 correspondant, lequel autorise à la patte 18 de s'effacer au moins partiellement à l'intérieur du corps 14 pendant l'engagement. Chaque patte de clippage 18 est libre sur ses deux bords longitudinaux et à son extrémité libre opposée à l'extrémité pourvue de la zone de raccordement 21 au reste du corps 14. L'extrémité libre de chaque patte de clippage 18 se termine par une tête 22 équipée d'une surface d'arrêt 23 disposée sensiblement de manière coplanaire avec les surfaces d'appui 17 formées dans le corps 14. Après l'engagement du corps 14 dans l'ouverture 12 jusqu'à une position outrepassant les pattes de clippage 18 pour autoriser un retour élastique vers leur configuration naturelle, les surfaces d'arrêt 23 formées aux extrémités libres des pattes de clippage 18 sont en contact avec le côté arrière de l'élément de support 11, quelle que soit la position de pivotement de l'écrou 10, c'est-à-dire qu'il soit bloqué ou non. Cette mise en contact automatique après engagement du corps 14 et des pattes 18 au travers de l'ouverture 12 confère un effet de verrouillage de l'écrou 10 sur l'élément de support 11, même avant le pivotement de l'écrou 10 vers l'état bloqué. Les pattes 18 peuvent avantageusement être opposées dans la deuxième direction principale Z2, ce qui a pour effet de renforcer la retenue axiale réalisée par les pattes de clippage 18 à l'état bloqué par rapport à celle réalisée dans les autres configurations de pivotement, car les pattes 18 exercent alors un appui arrière au niveau des extrémités longitudinales de l'ouverture 12.

Pour faciliter la flexion de la patte de clippage 18 vers l'intérieur de l'évidement 20 adjacent, la tête 22 aménagée à l'extrémité libre de chaque patte de clippage 18 peut comporter extérieurement un pan coupé 24. L'inclinaison du pan coupé 24 favorise la transformation d'un effort axial transmis au corps 14 pendant son engagement dans l'ouverture 12 en un effort transversal transmis par le pourtour de l'ouverture 12 à la patte de clippage 18.

Dans le cas où l'ouverture 12 présente une forme oblongue, la section transversale du corps 14 peut présenter une forme oblongue aux dimensions inférieures à celles de l'ouverture 12. De même, la section transversale de la tête 15 peut présenter une forme oblongue aux dimensions supérieures à celles de l'ouverture 12.

Dans une variante donnant satisfaction en pratique, l'angle de décalage α est de 20 degrés. Cette valeur particulière est un compromis entre la volonté d'une valeur angulaire de pivotement faible avant de parvenir à l'état bloqué, mais suffisante pour que le corps 14 procure une retenue efficace de l'écrou 10 sur l'élément de support 11.

Dans une mode de réalisation en aucun limitatif, le corps 14 est formé par une membrane 25 conformée de manière idoine, tandis que son extrémité opposée à la tête d'appui 15 est pourvue d'un logement 26 de réception de vis.

Un deuxième mode de réalisation pourrait être envisagé dans lequel chaque patte de clippage serait raccordée sur toute sa longueur au reste du corps par l'un de ses bords longitudinaux au moyen d'un voile de raccordement. La flexion du voile associé à une patte de clippage donnée assurerait alors le débattement de la patte de clippage en direction de l'évidement correspondant formé dans le corps.

## Revendications

1. Dispositif de fixation sur un élément de support (11), comportant un écrou plastique (10) percé, dans une direction axiale (X), d'un trou (13) adapté à se conformer par déformation plastique au contour d'un élément fileté extérieurement, ledit écrou (10) comprenant un corps (14) insérable axialement dans une ouverture allongée (12) de l'élément de support (11), la section transversale du corps (14) étant complémentaire de l'ouverture (12) et allongée dans une première direction principale (Z1) de manière que l'écrou (10) soit enfiché à travers l'ouverture (12) puis bloqué par pivotement avec une tête d'appui (15) aménagée à une extrémité du corps (14) et un rétrécissement intermédiaire entre la tête d'appui (15) et le corps (14), muni d'au moins une surface de butée pour limiter le pivotement de l'écrou (10), **caractérisé en ce que** la tête (15) présente une forme complémentaire de l'ouverture (12) avec une section transversale allongée dans une deuxième direction principale (Z2) formant avec la première direction principale (Z1) un angle de décalage (α) compris entre 5 degrés et 25 degrés, et **en ce que** ladite au moins une surface de butée est configurée pour limiter le pivotement de l'écrou (10) par rapport à l'ouverture (12) à un angle sensiblement égal audit angle de décalage (α), de sorte que la tête (15) vienne recouvrir la totalité de l'ouverture (12) au blocage de l'écrou (10).

2. Dispositif selon la revendication 1, **caractérisé en ce que** le corps (14) comporte deux pattes de clippage (18) pour retenir l'écrou (10) sur l'élément de support (11) quelle que soit la configuration de pivotement de l'écrou (10) par rapport à l'ouverture (12), lesdites pattes (18) étant opposées dans la deuxième direction principale (Z2).

3. Dispositif selon la revendication 2, **caractérisé en ce que** chaque patte de clippage (18) est disposée le long d'un évidement (20) aménagé extérieurement dans le corps (14).

4. Dispositif selon l'une quelconque des revendications 1 à 3, **caractérisé en ce que** la section transversale du corps (14) présente une forme oblongue aux dimensions inférieures à celles de l'ouverture (12).

5. Dispositif selon l'une quelconque des revendications 1 à 4, **caractérisé en ce que** la section transversale de la tête (15) présente une forme oblongue aux dimensions supérieures à celles de l'ouverture (12).

6. Dispositif selon l'une quelconque des revendications 1 à 5, **caractérisé en ce que** l'angle de décalage (α) est de 20 degrés.

## Claims

1. Fastening device to a support element (11), including a plastic nut (10) drilled, in an axial direction (X), with a hole (13) adapted to conform by plastic deformation to the contour of an externally threaded element, said nut (10) including a body (14) adapted to be inserted axially into an opening (12) of the support element (11), the cross section of the body (14) being complementary to the opening (12) and elongate in a first main direction (Z1) so that the nut (10) is passed through the opening (12) and then locked by pivoting with a bearing head (15) at one end of the body (14) and an intermediate narrowing between the bearing head tool (15) and the body (14), provided with at least one stop surface to limit pivoting of the nut (10), characterized is that the head (15) has a shape complementary to that of the opening (12) with a cross section elongate in a second main direction (Z2) forming with the first main direction (Z1) an offset angle (α) between 5 degrees and 25 degrees, and in that said at least one stop surface is configured to limit pivoting of the nut (10) relative to the opening (12) to an angle substantially equal to said offset angle (α), so that the head (15) comes to cover the opening (12) completely to lock the nut (10).

2. Device according to Claim 1, **characterized in that** the body (14) includes two clipping lugs (18) for retaining the nut (10) on the support element (11) whatever the configuration of pivoting the nut (10) relative to the opening (12), said lugs (18) being opposed in the second main direction (Z2).

3. Device according to Claim 2, **characterized in that** each clipping lug (18) is disposed along a recess (20) provided externally in the body (14).

4. Device according to any one of Claims 1 to 3, **characterized in that** the cross section of the body (14) has an oblong shape smaller than the opening (12).

5. Device according to any one of Claims 1 to 4, **characterized in that** the cross section of the head (15) has an oblong shape larger than the opening (12).

6. Device according to any one of Claims 1 to 5, **characterized in that** the offset angle (α) is 20 degrees.

## Patentansprüche

1. Vorrichtung zum Befestigen an einem Trägerelement (11), die eine Kunststoffmutter (10) aufweist, die in einer axialen Richtung (X) mit einem Loch (13) versehen ist, das dazu eingerichtet ist, sich durch plastische Verformung an den Umfang eines mit einem Außengewinde versehenen Elements anzupassen, wobei die Mutter (10) über einen Körper (14) verfügt, der axial in eine längliche Ausnehmung (12) des Trägerelements (11) einfügbar ist, wobei der Querschnitt des Körpers (14) dem der Ausnehmung (12) entspricht und derart in eine erste Hauptrichtung (Z1) verlängert ist, dass die Mutter (10) durch die Ausnehmung (12) eingesteckt und anschließend durch Drehung mittels eines an einem Ende des Körpers (14) eingerichteten Stützkopfs (15) und einer zwischen dem Stützkopf (15) sowie dem Körper (14) liegenden Verengung blockiert ist, die wenigstens eine Anschlagfläche aufweist, um die Drehung der Mutter (10) zu begrenzen, **dadurch gekennzeichnet, dass** der Kopf (15) eine der Ausnehmung (12) entsprechende Gestalt mit einem länglichen Querschnitt in einer zweiten Hauptrichtung (Z2) aufweist, die mit der ersten Hauptrichtung (Z1) einen Versatzwinkel (α) bildet, der zwischen 5 Grad und 25 Grad liegt, und dass die wenigstens eine Anschlagfläche zum Begrenzen der Drehung der Mutter (10) in Bezug auf die Ausnehmung (12) auf einen Winkel eingerichtet ist, der im Wesentlichen gleich zu dem Versatzwinkel (α) ist, so dass der Kopf (15) bei dem Blockieren der Mutter (10) die Ausnehmung (12) vollständig bedeckt.

2. Vorrichtung nach Anspruch 1, **dadurch gekennzeichnet, dass** der Körper (14) zwei Einrastzungen (18) aufweist, um die Mutter (10) unabhängig von der Drehanordnung der Mutter (10) in Bezug auf die Ausnehmung (12) an dem Trägerelement (11) zu halten, wobei sich die Zungen (18) in der zweiten Hauptrichtung (Z2) gegenüberliegen.

3. Vorrichtung nach Anspruch 2, **dadurch gekennzeichnet, dass** jede Einrastzunge (18) entlang einer außen in dem Körper (14) eingerichteten Freimachung (20) angeordnet ist.

4. Vorrichtung nach einem der Ansprüche 1 bis 3, **dadurch gekennzeichnet, dass** der Querschnitt des Körpers (14) eine längliche Gestalt aufweist, die kleiner als die Ausnehmung (12) ist.

5. Vorrichtung nach einem der Ansprüche 1 bis 4, **dadurch gekennzeichnet, dass** der Querschnitt des Kopfs (15) eine längliche Gestalt aufweist, die größer als die Ausnehmung (12) ist.

6. Vorrichtung nach einem der Ansprüche 1 bis 5, **dadurch gekennzeichnet, dass** der Versatzwinkel (α) 20 Grad beträgt.
